# EUROPEAN PATENT APPLICATION

(11) **EP 4 501 591 A1**
(43) Date of publication of application: **05.02.2025**
(21) Application number: 23189526.9
(22) Date of filing: 03.08.2023
(51) Int. Cl.: B29C 64/241, B29C 64/245, B29C 64/106, B22F 12/00, B22F 12/30, B33Y 30/00

(54) **A ROTARY MULTI-AXIAL ADDITIVE MANUFACTURING APPARATUS**

(71) Applicant: Technische Universität Berlin, 10623 Berlin (DE)
(72) Inventor: Pang, Shumin, 10965 Berlin (DE); Wu, Dongwei, 10965 Berlin (DE); Gurlo, Aleksander, 14089 Berlin (DE); Hanaor, Dorian, 12203 Berlin (DE)
(74) Representative: Hertin und Partner Rechts- und Patentanwälte PartG mbB

(57) **Abstract**

The invention relates to an additive manufacturing apparatus. The additive manufacturing apparatus comprises a print head, a support and a receptor. The receptor is positioned on the support, wherein the print head is arranged to print a print material onto the receptor. The print material is flowable from the print head in a print direction along a print axis. The additive manufacturing apparatus comprises a first rotation device and a second rotation device. The first rotation device is arranged to provide a first rotation axis and the second rotation device is arranged to provide a second rotation axis, such that the support and/or the receptor is rotatable along the first rotation axis and along the second rotation axis, wherein the first rotation axis and the second rotation axis span a plane perpendicular to the printing axis. The first rotation device and the second rotation device each comprise a motor, a bearing wheel and a driven wheel, wherein the motor is connected to the bearing wheel and the bearing wheel is connected to the driven wheel and the driven wheel is connected to the support and/or receptor. By a drive of the motor a rotation of the receptor and/or support along the first rotation axis and/or the second rotation axis is executable.

## Description

The invention relates to an additive manufacturing apparatus. The additive manufacturing apparatus comprises a print head, a support and a receptor. The receptor is positioned on the support, wherein the print head is arranged to print a print material onto the receptor. The print material is flowable from the print head in a print direction along a print axis. The additive manufacturing apparatus comprises a first rotation device and a second rotation device. The first rotation device is arranged to provide a first rotation axis and the second rotation device is arranged to provide a second rotation axis, such that the support and/or the receptor is rotatable along the first rotation axis and along the second rotation axis, wherein the first rotation axis and the second rotation axis span the plane perpendicular to the printing axis. The first rotation device and the second rotation device each comprise a motor, a bearing wheel and a driven wheel, wherein the motor is connected to the bearing wheel and the bearing wheel is connected to the driven wheel and the driven wheel is connected to the support and/or receptor. By a drive of the motor, a rotation of the receptor and/or support along the first rotation axis and/or the second rotation axis is executable.

### Background and state of the art

The emergence of 3D printing with 3D printers (additive manufacturing apparatuses), also known as additive manufacturing, is seen as a manufacturing revolution, referring to various bottom-up techniques for producing 3D objects. 3D printing is a unique manufacturing concept that allows the flexibility to prepare highly complex and precise structures that are difficult to achieve using traditional manufacturing methods such as casting and machining. As a result, 3D printing has rapidly attracted the attention of the scientific and engineering communities since its emergence in the 1980s.

However, parts fabricated by conventional flat layer deposition process have several serious limitations in terms of shape and performance. One intractable drawback is the unavoidable staircase effect, which reduces the surface quality and geometrical accuracy. Staircase effect can be mitigated by utilizing thinner slices or by implementing an adaptive slicing protocol [1], but it still leaves print marks, which can affect the surface appearance of the printed part and its performance. And the problem may become more serious when printing the surface with some minute but critical features or with large curvature. In addition, there is a fundamental issue with traditional printing, the finished part will rely on the adhesive strength between layers in the direction of printing, resulting in different adhesive strength in layers and anisotropy property. On the other hand, the support structure is unavoidable in models with large overhangs and severe angles, which leads to extra time and material cost. And the exclusion of support material or receptor material may lead to mid-print or post-print tissue collapse.

Recently, with the above considerations in mind, 3D printing has been reimagined to better serve the creation of models with axially oriented, trans-construct voids. The layered stacking of materials on a rotating cylindrical axis was proposed in [2] in which the feasibility of a multilayer electrospinning method for constructing vascular scaffolds on a rotating cylindrical mandrel was demonstrated in 2005.

In [3] the first physical example of a 3D printer with the purpose to extrude material onto a rotating mandrel was demonstrated. A major functional drawback was the inability to vary the distance between the mandrel and the printhead in a way that would allow for the iterative deposition of multiple layers radially outward from the mandrel.

In 2013, Kenich et al. (see [4]) produced the first fully functional printer that could print on curved surfaces, including Z-motion capability, with the ability to print multiple layers. In late 2016, Sichuan Revotek Co. Ltd. claimed the successful implantation of 3D bioprinted blood vessels into monkeys, constructed with Revotek's T-Series 3D Bio Printer (see [5]). However, a disadvantage of these printers is that they can only print structures with circular cross-sections.

There are still some other difficulties to be overcome in the current practical use of this emerging 3D printing technology. The rotation angle being affected by the rotation radius is a common problem. The design of the printer, which is not integrated, causes its movement and rotation to be unlinked. Furthermore, the high cost of the machine and the difficulty of slicing are the technical difficulties that need to be solved.

### Objective of the invention

The objective of the invention is to eliminate the disadvantages of the prior art. In particular, it is an objective of the invention to provide an additive manufacturing apparatus with which an efficient printing process can be carried out.

### Summary of the invention

The objective of the invention is solved by the independent claims. Advantageous embodiments of the invention are disclosed in the dependent claims.

In a first aspect, the invention relates to an additive manufacturing apparatus for carrying out an additive manufacturing process comprising a print head, a support and a receptor, wherein the receptor is positioned on the support, wherein the print head is arranged to print a print material onto the receptor, wherein the print material is flowable from the print head in a print direction along a print axis, characterised in that the additive manufacturing apparatus comprises a first rotation device and a second rotation device, wherein the first rotation device is arranged to provide a first rotation axis and the second rotation device is arranged to provide the second rotation axis, such that the support and/or the receptor is rotatable along the first rotation axis and along the second rotation axis, wherein the first rotation axis and the second rotation axis span a plane perpendicular to the printing axis, wherein the first rotation device and the second rotation device each comprise a motor, a bearing wheel and a driven wheel, wherein the motor is connected to the bearing wheel and the bearing wheel is connected to the driven wheel and the driven wheel is connected to the support and/or receptor, such that by a drive of the motor a rotation of the receptor and/or support along the first rotation axis and the second rotation axis is executable.

The support preferably corresponds to the first rotational axis and the receptor corresponds to the second rotational axis. Particularly, a longitudinal axis of the support corresponds to the first rotational axis and a longitudinal axis of the receptor corresponds to the second rotational axis.

The additive manufacturing apparatus according to the invention has proved to be very advantageous in many aspects, which will be discussed in more detail below.

It has been surprisingly advantageous that by using the first rotation device and the second rotation device, a transmission mechanism can be provided by which the receptor and/or the support can be rotated along the first rotation axis and the second rotation axis. Advantageously, a reliable translation into a rotational movement or rotation along the first rotation axis and the second rotation axis is achieved. Of particular advantage is that the additive manufacturing apparatus according to the invention results in an increase in the rotational distance when layers comprising printing material are applied to the receptor. By the rotational distance is preferably meant a sheet length along which a layer comprising printing material is applied to the receptor.

In this respect, the problem known in the prior art is that a first layer is applied to the receptor, which performs a rotation along the first and/or second axis of rotation and has the rotational distance L₁ = r₁ * θ, where θ denotes the angle and r₁ denotes the radius of the circular segment of the first layer having the rotational distance L₁. Another layer, the second layer, which is to be applied to the first layer along the same angle θ, has the rotational distance L₂ = r₂ * θ, where r₂ denotes the radius of the segment of the circle of the second layer which has the rotational distance L₂. It can be seen that r₁ < r₂ applies, i.e. r₁ is smaller than r₂, so that accordingly L₁ is also smaller than L₂. This is disadvantageous because it is associated with a higher effort for the manufacturing apparatus, since different printing times are necessary for the application of the second layer on the first layer, in particular more time must then be spent on the second layer, the upper layer, and/or more material must be applied for the first layer, the lower layer. This can also be detrimental to the stability of the product to be manufactured by the additive manufacturing apparatus. The manufacturing step for the second layer is thus greater than that for the first layer.

The additive manufacturing apparatus according to the invention advantageously avoids this as the first rotation device and the second rotation device provide a linear velocity transmission mechanism. In particular, there is an effective translation into a rotational movement along the first rotation axis and/or the second rotation axis in which the rotational distance is not affected by the number of layers. In other words, the rotational distance is surprisingly advantageously not influenced by the height of the print head to the receptor. Again in other words, the rotation distance is not influenced by the print level of the printhead. Compared to the prior art, this advantageously means that the radius of the first circular segment of the first layer and the radius of the second circular segment through the second layer are identical, denoted r. Thus, for the rotational distance L₁ of the first layer L₁ = r * θ along an angle of rotation θ and for the rotational distance L₂ = r* θ holds, thus L₁ = L₂. Consequently, for the manufacturing step for the second layer, the effort for applying it is equal to the first layer. Advantageously, this achieves a more efficient operation of the additive manufacturing apparatus, since the same effort can be applied for the first layer and the second layer and, in particular, no higher effort has to be applied for the second layer.

This results in optimal resolution for the layers to be printed on the receptor, especially when the print head has a different height or distance from the receptor. As a result, both a higher print quality and a higher print precision are achieved for the production of objects that can have small and large radial dimensions. The improved precision is particularly evident in terms of the position on the receptor to which the printing material is to be applied and the design, in particular the distance of rotation, that the layers may have.

A further surprising advantage of the additive manufacturing apparatus according to the invention is that a particularly high pressure moment can be achieved for the receptor and/or the support for rotation along the first and/or the second rotation axis. A surprising advantage is further that the high torque can be maintained without the material to be printed being affected by the torque. This is particularly important when the material to be printed comprises a stiff material, highly viscous material or fibrous structures. This clearly shows that there is a wide range of applications for the additive manufacturing apparatus according to the invention, with which a variety of materials can be printed on the receptor.

Another surprising advantage is that the additive manufacturing apparatus is compatible with many slicers known from the prior art. This can be justified, without being limited to theory, in particular by the fact that the distance-step ratio can be maintained during printing. The distance-step ratio preferably means the ratio between the amount of printing material fed during one execution of the motor. It has been shown that by using the first rotation device and the second rotation device, the angle of rotation of the first rotation axis and/or the second rotation axis is self-adjusting to the print height and the distance of movement. Advantageously, no complex or sophisticated algorithm is required, which simplifies the modelling and acceleration of the slicing.

The additive manufacturing apparatus advantageously has a plurality of translational and rotational axes. In particular, the additive manufacturing apparatus has movement axes that can run along the three usual Cartesian coordinate axes in terms of possible translational movements and, in addition, two rotation axes that are essentially perpendicular to the print axis. Advantageously, this allows materials to be printed in different orientations and, in particular, objects that do not have a circular cross-section can be created by a rotation process. This allows the layers to be applied evenly and stably.

Another advantage of the manufacturing apparatus according to the invention is that printing can be carried out quickly and inexpensively. This means that the additive manufacturing apparatus is also suitable for implementation in the context of mass production. Consequently, the use of the additive manufacturing apparatus according to the invention also results in a particularly economical production of components.

An additive manufacturing apparatus (also synonymous 3D printer) is preferably an apparatus with which the additive manufacturing process (also synonymous 3D printing) can be carried out. Additive manufacturing apparatuses can be used in industry, model making and/or research for the production of models, patterns, prototypes, tools, biotechnology, medicine, medical technology, art, end products and/or for private use.

The additive manufacturing apparatus is regarding the size, particular the length, width and height, scalable. It can have for examples sizes of 30 cm * 30 cm * 30 cm. But it is readily scalable to fit the size of the printing objects. This range can be from 10 cm * 10 cm * 10 cm to 1000 cm (length) * 500 cm (width) * 300 cm (height). The receptor can preferably have sizes from 0.1 cm in length and 0.05 cm in diameter to 500 cm in length and 100 cm in diameter. The holder can preferably have sizes from 0.5 cm * 0.5 cm * 0.5 cm to 800 cm * 400 cm * 200 cm. These dimensions can be adjusted in the course of a use of the additive manufacturing apparatus to fit in different scenarios in the additive manufacturing process.

Additive manufacturing is also synonymously referred to as 3D printing or generative manufacturing. In additive manufacturing, components are built up layer by layer by the material (the print material) coming out of the print head. In particular, the component is not created by removing material, which is the case with milling, for example. This results in enormous flexibility and freedom of design, which is even more pronounced in the additive manufacturing apparatus according to the invention due to the 5 axes (3 axes for translations, 2 axes for rotations).

The print head is a component of the additive manufacturing apparatus within which the print material flows. The print material passes through the print head in order to be applied layer by layer and to produce the component. Preferably, the print head may comprise one or more nozzles. Preferably, the width of the nozzle can be predetermined by the nozzle. A nozzle may preferably have a tapered outlet, an expanding outlet or a constant outlet. The print head is preferably adapted to move along a plane that is perpendicular to the print axis. The print head is also preferably movable along the print axis.

The receptor preferably designates a component of the additive manufacturing apparatus, which preferably serves to deposit the printed material onto it. The receptor can be provided, for example, by a body which is elongated, i.e. in particular has a greater length than width and/or height. The length of the receptor preferably corresponds to the dimension of the receptor that is perpendicular to the print axis. Thus, the length of the receptor forms an axis of the plane which is perpendicular to the pressure axis. Preferably, the length of the receptor is given by its longitudinal axis. Preferably, the width of the receptor also forms an axis of the plane which is perpendicular to the axis of pressure. Preferably, the height of the receptor may extend substantially along the axis of pressure. For example, the receptor may be in the form of a rod, for example a solid rod or a hollow rod. Preferably, the receptor can have a regular or irregular surface. The receptor can comprise a material selected from a group comprising plastic, metal, ceramic, rubber, silicone and/or sponge. The preferred materials mentioned for the receptor have proven to be advantageous in order to enable reliable adhesion with the print material. Furthermore, it can be preferred that the receptor is receptor is positioned essentially horizontal. It can be also preferred, that the receptor is positioned along the support in a non-horizontal direction.

The support preferably refers to a component to which or on which the receptor is positioned. In other words, the support preferably serves as a carrier for the receptor. Thus, the support can preferably be understood as a carrier for the receptor. For example, it may be preferred that the receptor has two attachment sites to which the receptor is attached. It may be preferred that the receptor is attached substantially horizontally to the support. It may also be preferred that the receptor is not attached horizontally to the support. The design of the receptor is within the knowledge of the average person skilled in the art, so there is no need to go into this further.

The printing material preferably designates the material to be used with which the additive manufacturing is to be carried out. The print material can be used in different phases, which will be explained in more detail below. The print material is flowable starting from the print head onto the receptor.

The printing material preferably flows in a printing direction. The printing direction is along a printing axis. The printing direction is the direction along which the material flows in order to reach the receptor. The direction of printing preferably points in the direction of gravity. Thus, the direction of printing is preferably substantially perpendicular to the surface of the earth. In the context of the invention, the printing axis refers to an axis extending along a direction vector pointing in the printing direction. The print axis and thus the print direction are substantially perpendicular to a plane along which the print head can be moved.

The additive manufacturing apparatus comprises a first rotation device and a second rotation device. The first rotation device designates a component that preferably serves to provide a first rotation axis. In particular, the first rotation device serves to provide movement along a first rotation axis. Similarly, the second first rotation device denotes a component that preferably serves to provide a second rotation axis. In particular, the second rotation device serves to provide a movement along a second rotation axis. Thus, the support and/or the receptor is rotatable along the first and/or second rotation axes. The first rotation axis and the second rotation axis are axes perpendicular to the printing axis. In particular, the first rotation axis and the second rotation axis form a plane perpendicular to the direction of pressure and the axis of pressure. In other words, each of the first rotation axis and the second rotation axis is substantially perpendicular to the printing axis.

Thus, the additive manufacturing apparatus has 5 degrees of freedom, i.e. five axes of motion, to carry out additive manufacturing. Two degrees of freedom are available for a movement along a plane for the print head. Another degree of freedom is available for a relative movement between print head and receptor. Furthermore, there is a rotation movement option along two rotation axes and thus two further degrees of freedom.

The first rotation device and the second rotation device each comprise a motor, a bearing wheel and a driven wheel. The motor is connected to the bearing wheel. The bearing wheel is in turn connected to the driven wheel. The driven wheel is connected to the support and/or the receptor. Thus, a drive of the motor leads to a rotation of the bearing wheel. This in turn implies a rotation of the driven wheel and accordingly also a rotation of the receptor and/or the support. The transition into a rotation thus preferably takes place starting from the motor, then via the bearing wheel, then via the driven wheel and then to the support and/or receptor.

Motor means the component used in particular to drive the receptor and/or support to rotate along the first and/or second rotation axis. The bearing wheel is a wheel designed to be driven in rotation by the motor. In other words, the motor is used to drive or rotate the bearing wheel. The driven wheel is a wheel that is designed to rotate as a result of the rotation of the bearing wheel. This in turn results in a rotation of the support and/or the receptor.

The bearing wheel can preferably be connected to the driven wheel directly, meaning without any connection means. Preferably, the bearing wheel is connected to the driven wheel such that a rotation axis of the bearing wheel and a rotation axis of the driven wheel are perpendicular to each other. In a further preferred embodiment, the bearing wheel and the driven wheel are (directly) connected to each other such that an angle between the rotation axis of the bearing wheel and a rotation axis of the driven wheel are not perpendicular to each other. Advantageously, the bearing wheel can be and the motor will not touch or hinder the rotation of the driven wheel. In a further preferred embodiment, several bearing wheels are stacked together. They can preferably have different diameters. Therefore, the bearing wheel and the motor can tilt at different angles to choose which bearing wheel to use. Finally, different transmission ratios can be reached by switching the tilting angle.

In a further preferred embodiment the additive manufacturing apparatus is characterised in that the motor is directly connected to the bearing wheel or the motor is connected to the bearing wheel via a belt, a first gear wheel and a second gear wheel, wherein the first gear wheel is connected to the motor and the second gear wheel is connected to bearing wheel and the drive of the motor is transmittable via the belt.

Thus, the additive manufacturing apparatus allows several options to reliably translate into a rotational movement along the first and/or the second rotation axis.

In a preferred embodiment, the motor is directly connected to the bearing wheel. A direct connection means in particular that there is no connecting means between the motor and the bearing wheel. Advantageously, a particularly compact design of the first rotation device and/or the second rotation device can be achieved, which also has an advantageous effect on the spatial dimensions of the additive manufacturing apparatus. Furthermore, it is advantageous that when the bearing wheel is connected directly to the motor, little or no effort is required.

In another preferred embodiment, the motor is connected to the bearing wheel via a belt. Preferably, the connection via a belt is such that a first gear wheel and a second gear wheel are located between the motor and the bearing wheel, the first gearwheel being connected to the motor and the second gearwheel being connected to the bearing wheel. The belt preferably lies on the first gearwheel and the second gearwheel. Thus, through the belt and a corresponding movement of the first gear wheel and the second gear wheel, a drive of the motor can be translated into a rotation of the bearing wheel. The belt preferably denotes a self-contained belt, which lies in particular between the motor and the bearing wheel, in particular the first and the second gear wheel. Preferably, the motor transmits a force from the motor to the bearing wheel. The belt can preferably comprise a material selected from a group comprising leather, rubber, plastic, other textiles or mixtures thereof. By using a belt and a first gear wheel and a second gear wheel, the rotation speed can advantageously be set and/or adjusted particularly precisely, especially via the dimensional ratio of the first gear wheel and the second gear wheel. Another advantage of using the belt is that there is more space available for the bearing wheel in the vicinity of an area of the driven wheel, so that a higher integrity is also achieved with regard to the rotation as such.

In a further preferred embodiment the additive manufacturing apparatus is characterised in that the receptor and/or the support is connected to the driven wheel via a coupling.

A coupling is an element for rigid, elastic, movable or detachable connection to transmit the rotation of the driven wheel to the receptor and/or support. The use of a coupling has proven to be advantageous in that a particularly reliable transmission of the rotation of the driven wheel to the receptor and/or support is guaranteed. In particular, the occurrence of overloads, for example due to an excessively fast rotational speed of the driven wheel, is avoided by the use of a coupling, as it can sufficiently cushion any overloads that may occur. Consequently, the risk of a failure is considerably minimised, so that no, or only in very special rare situations, impact times occur. Consequently, the use of a coupling between the driven wheel and the receptor and/or support enables additive manufacturing to be carried out in a long-term stable manner.

In a further preferred embodiment the additive manufacturing apparatus is characterised in that the motor is selected from a group comprising a stepper motor, a gear motor, an electric motor and/or DC motor.

In the context of the invention, the motor is present as a prime mover in order to convert a form of energy into kinetic energy, in particular thus into a rotation for the bearing wheel in order to enable rotation about the first and/or second rotation axis.

A stepper motor comprises a stationary stator and a rotor rotating inside it. The torque that drives the rotor is generated by differently aligned magnetic fields in the stator and rotor. The rotor always rotates in such a way that the greatest possible magnetic flux is formed. In contrast to other motors, the stepper motor only has coils in the stator. The rotary movement is therefore created by switching individual windings on and off in a targeted manner. This makes it very easy to control the direction of rotation and speed of the motor.

A gear motor preferably refers to a combination comprising a gearbox and a motor. The connection between the two components can preferably be made directly, for example, but not limited to, by a press connection, an adhesive connection, welding, splines and/or keys.

An electric motor comprises a rotating electromagnet called a rotor or armature. The rotor is connected to the electrical source via so-called brushes or sliding contacts. The source provides a current flow through the rotor. Furthermore, the rotor is located in an external magnetic field. In the simplest case, this magnetic field can preferably be caused by one or two permanent magnets, the so-called stators. If an electric current flows through the rotor, the rotor becomes an electromagnet with north and south poles. The magnetic forces that occur can cause the rotor to rotate.

A DC motor also converts electrical energy into mechanical energy. The DC motor preferably comprises a current-carrying conductor surrounded by a magnet. The conductor itself thus becomes an electromagnet. The magnetic poles of the magnet then repel or attract each other. This creates a rotary motion.

Said motors have been shown to be particularly powerful in their ability to control the rotation of the receptor and/or support along the first and/or second rotation axis. Advantageously, said motors are also inexpensive, robust and easy to combine with the additive manufacturing apparatus.

It may be preferred that the driven wheel is directly connected to the receptor and/or support. Furthermore, it may be preferred that the driven wheel is connected to the support and/or receptor via a connecting means, preferably a coupling. A direct connection is advantageous due to the direct transmission of the rotation, so that no further effort has to be expended for this and the transmission is thus particularly easy to provide. A transmission through the use of a coupling is therefore particularly advantageous, as additional cushioning is made possible when additional loads occur. As described above, the risk of a functional failure is considerably minimised, so that a long-lasting operational suitability of the additive manufacturing apparatus is achieved. The preferred embodiments described provide options for mechanically connecting the driven wheel to the support and/or receptor.

It can be preferred that the driven wheel is connected directly to the receptor and/or support. Furthermore, it can be preferable for the driven wheel to be connected to the support and/or receptor via a connecting means, preferably a coupling. A direct connection is advantageous due to the direct transmission of the rotation, so that no further effort is required for this and the transmission can therefore be provided in a particularly simple manner. Transmission through the use of a clutch is particularly advantageous because additional cushioning is made possible when additional loads occur. As described above, the risk of functional capability is significantly minimized, so that long-term operational capability of the additive manufacturing apparatus is achieved. The preferred embodiments described represent options for mechanically connecting the driven wheel to the support and/or receptor.

In a further preferred embodiment the additive manufacturing apparatus is characterised in that the driven wheel is connected to the support and/or the receptor via a connection means, wherein preferably the connection means is a shaft, particularly preferred a flexible shaft.

A connection means can transfer the rotation of the driven wheel to the support and/or receptor. This has proven to be particularly advantageous with a shaft, since the implementation of a shaft is particularly easy to carry out. A flexible shaft means a shaft that is flexible and can therefore also be bent easily to meet the requirement of complex motions. A flexible shaft advantageously ensures a high level of functionality, since mechanical stresses can also be absorbed by the flexible shaft during operation of the additive manufacturing apparatus.

In a further preferred embodiment the additive manufacturing apparatus is characterised in that that the first rotation device and/or the second rotation device comprise an encoder which is connected to the driven wheel, wherein the additive manufacturing apparatus comprises a further motor for a drive of the support and/or receptor, wherein the encoder is configured to send an electric signal to the motor for the drive of the support and/or receptor.

The above-mentioned preferred embodiment offers a further option for a contact and thus a transmission of the rotation of the driven wheel to the support and/or receptor. In the embodiment with an encoder, no mechanical transmission takes place directly from the driven wheel to the support and/or receptor, but with the aid of an electrical signal. In other words explained, there will still be a mechanical transmission from the motor to bearing wheel, and then to the driven wheel, but the rotation is transmitted through an electric signal (which is preferably a digital signal) through the encoder rather than the mechanical transmission. The transmission via an electric signal (preferably a digital signal) can be used to replace a connection means, for example a flexible shaft, between the driven wheel and the support and/or receptor.

An encoder preferably means a device that is able to detect a current position of the driven wheel and to output it as an electrical signal. In particular, the encoder is able to measure a rotational movement of the driven wheel. The measurement or detection can take place mechanically, electrically and/or optically. Due to the possibility of outputting an electrical signal, an electrical signal can be sent to a motor for a drive of the receptor and/or support after a position of the driving wheel has been detected or a measured of the driven wheel. The further motor serves in particular to rotate the support and/or receptor. The further motor can be one of the motors as described above for the operation of the bearing wheel. Furthermore, it is advantageous that, in particular by using an encoder, a particularly precise measurement or detection of a position of the driven wheel can be carried out and a synchronous rotation between the driven wheel and the support and/or receptor can also be achieved as a result. Furthermore, due to the electrical transmission of the rotation, there is a simple and stable construction which has a low susceptibility to failure.

In a further preferred embodiment the additive manufacturing apparatus is characterised in that a friction layer is present on the driven wheel, preferably the friction layer comprises a material being selected from a group comprising rubber, ceramic, silicon, nickel, chromium, carbide, in particular tungsten carbide and/or chromium carbide, stainless steel, their compounds and/or alloys, wherein preferably the friction layer has a thickness between 1 nm - 1 cm, preferably between 1 µm - 5000 µm, particularly preferably between 50 µm - 500 µm.

Advantageously, a better adhesion can be achieved by using a friction layer. In particular, undesirable forms of movement are advantageously avoided, such as jerky movements. The grip on the driven wheel is considerably improved so that a reliable rotation along the first and/or second rotation axis can be achieved. The materials and/or thicknesses mentioned have proven to be reliable in order to enable a long-lasting functional suitability for the friction layer.

In a further preferred embodiment the additive manufacturing apparatus is characterised in that the additive manufacturing apparatus comprises a bottom plate and/or a first sliding rail to provide a movement of the print head along the print axis, a second sliding rail and third sliding rail to provide a movement along a plane perpendicular to the print axis, wherein preferably the driven wheel is positioned on the bottom plate or on the first sliding rail and the motor and the bearing wheel are positioned on the second and/or third sliding rail.

By a sliding rail is meant a guide device along which movement along an axis can be performed. With regard to the components of the additive manufacturing apparatus, the sliding rails provides an axis along which the movement can be carried out. A sliding rail preferably comprises a fixed and straight body, for example in the form of a rod. The components of the additive manufacturing apparatus are preferably movably attached to the sliding rail in order to be able to move along the sliding rail.

It is preferred that the additive manufacturing apparatus includes a first sliding rail. The first sliding rail serves in particular to move the print head along the print axis. Against this background, it is preferred that the first sliding rail extends along the print axis and in particular also along the printing direction. The second sliding rail and the third sliding rail are used to move the print head along a plane that is perpendicular to the print axis. This provides three degrees of freedom for movement of the print head. The second sliding rail and the third sliding are preferably movably connected to the first sliding rail. This makes it possible for a plane, in which the print head can move, to move or shift along the sliding rail and thus also along the print axis. The first sliding rail is preferably in the form of a section of a holder. The holder can preferably comprise two first sliding rails.

The bottom plate means particularly a bottom of the additive manufacturing apparatus. The bottom plate preferably means an area that represents a base for the additive manufacturing apparatus. The bottom plate can preferably be provided by an additional plate forming a part of the additive manufacturing apparatus. In a further preferred embodiment, the bottom plate can also form an area of a separate arrangement on which the additive manufacturing apparatus is placed, for example (but not limited to) the bottom of a table or the earth.

The driven wheel is preferably positioned on the bottom plate or on the first sliding rail. Furthermore, it is preferred that the motor and the bearing wheel are additionally positioned on the second and/or third sliding rail.

As a result, the mass of the print head can be kept particularly low in an advantageously surprising manner. In other words, a particularly low mass of the print head is made possible, so that the print head can move particularly quickly and easily. This is advantageous for the overall printing process. In particular, no additional components are attached to the print head, which means that the low mass of the print head can be maintained. The arrangement of the components of the first and/or second rotation device advantageously achieves a synergistic effect, since the considerable improvement in the printing process due to an improved possibility of movement of the print head was unexpected.

In a further preferred embodiment the additive manufacturing apparatus is characterised in that the additive manufacturing apparatus comprises a housing, wherein the housing surrounds the print head, wherein preferably a holder and is attached to a bottom plate, wherein preferably the housing comprises an at least partially transparent section.

The housing preferably means a component of the additive manufacturing apparatus that functions as a cover. Preferably the housing is in the form of a box covering at least the print head. It can also be preferred that the housing covers a bottom plate and/or a holder. Correspondingly, it is preferred that the housing has higher dimensions than a preferred holder and/or a bottom plate.

The housing advantageously enables the process of additive manufacturing to be carried out by the additive manufacturing apparatus without external influences. In this way, it can advantageously be ensured that, for example, dust or other foreign particles do not get inside. Another particularly relevant advantage is that the influence of the ambient temperature and humidity is also significantly reduced. As a result, the component to be printed achieves a particularly high build quality, since distortion is significantly reduced.

In a further preferred embodiment, the housing comprises an at least partially transparent section. The at least partially transparent section advantageously allows a user of the additive manufacturing apparatus to observe the additive manufacturing process. This also allows visual recognition of when and how any intervention is required should difficulties or problems arise during additive manufacturing. The at least partially transparent section is preferably present as a window. A preferred window as an at least partially transparent section is particularly advantageous in that it can be built into the housing easily and using technologies that have been tried and tested sufficiently in the prior art, so that it is associated with only particularly little effort.

In a further preferred embodiment the additive manufacturing apparatus is characterised in that the additive manufacturing apparatus comprises a retract, wherein the retract conveys the print material back into the print head, wherein preferably a slicer co-determines an action of the retract.

The term "retract" comes from the English term "retraction" and means withdrawal or retraction. In the context of the invention, the retract means preferably a mechanism in which the print material can be pulled back into the print head by a movement of a feed module. The feed module can preferably comprise a wheel, piston, screws, etc. The retract can create a pressure for the print material so that the print material no longer comes out of the nozzle. The retraction thus preferably includes the movement of a pair of feed wheels in order to pull back the print material. This is preferred when the print head changes position and/or does not print anything or no material should get from the nozzle to the receptor. It was surprising that the integration of a retract in the additive manufacturing apparatus according to the invention ensures that the printed material can be conveyed better. At the same time, clogging of the print head can advantageously be prevented, since the printing process can be continued quickly after the print head has changed its position, in particular with a light print head (due to the described preferred arrangement of the components of the first and/or second rotation device). Advantageously, no excess material escapes from the print head either, so that a precise design for the component to be produced is achieved. Those of ordinary skill in the art will recognize that there are a variety of options for providing mechanical functionality for the retract. Against this background, the principle described here is only one option out of several and is therefore not meant to be limited thereto.

The retraction mechanism can preferably be implemented by a feed wheel and/or counter wheel, which feeds the print material into the print head. The feed wheel can be actively driven by a motor, for example. A pressure can be built up between the print material and the feed wheel, in which a counter wheel presses the print material against the feed wheel. It is also possible for the counter wheel to be actively driven, for example by a motor connected in parallel or by gearing, as is the case in a so-called dual drive. It is also possible to integrate the conveyor wheel as a belt drive, as a gear, as a worm gear or as a profiled wheel comprising metals or flexible polymers.

In order to create a successful and clean 3D print, it is very important that an exact amount of filament can be printed in a specific position at the right time. Conversely, it is just as important that no print material exits the nozzle at the moment when no print material is needed. This exact interaction of the components is influenced by several factors (e.g. temperature, print material retraction and/or cutting of the print material, without being limited on these parameters). If the settings are not well coordinated, threading or droplets can form on the printed object or on the receptor. In addition, various settings are made in a preferred slicer for this purpose, in particular with regard to the print material retraction distance, the print material retraction speed, the temperature and the movement speed of the print head. In the case of the additive manufacturing apparatus according to the invention, this advantageously succeeds particularly well.

The slicer describes a software that makes a major contribution to the additive manufacturing process. The slicer preferably acts as an intermediary between a 3D model input by a user and the additive manufacturing apparatus itself. The slicer converts the input 3D model into a series of thin webs and layers of material that are applied to the receptor to manufacture the component. Parameters, such as the movements of the print head, are calculated and transmitted to the print head or the additive manufacturing apparatus in the form of a G code. G code, also known as DIN code, is a machine language that a user uses to tell the machine what to do. Users often use a CAD program (CAD is the abbreviation for computer-aided design) to draw the component they want to produce using additive manufacturing. The G-code therefore preferably acts as an intermediary between the CAD program and the 3D printer.

In a further preferred embodiment the additive manufacturing apparatus is characterised in that the print head comprises a temperature control device in which or on which a heater and/or a cooler is incorporated so that a temperature for heating and/or cooling the print material is providable.

The temperature control device means a device or portion of the print head that can be used to set and apply a temperature to the print material.

The temperature control device can preferably include a heating block, which serves in particular to heat the printing material. The heating block designates a preferably fixed component of the print head and preferably designates the area in which the print material is heated to the melting temperature. The temperature ranges or temperatures accordingly depend on the material composition of the printing material, for example it can be essentially from approx. 70 - 500°C. The increased temperature for melting the print material is preferably distributed homogeneously by the heating block. The heating block can preferably comprise a material selected from a group comprising aluminium, brass, steel, bronze, copper and/or titanium. It can also be preferred that one or more heating cartridges and/or temperature sensors are located on the heating block. In addition, it is also preferred that the heating block is designed to accommodate the heating cartridge, the temperature sensor, a nozzle and a heat break. The cartridge heater supplies the heat block with an increased temperature, so that the printing material inside the heat block melts. With the temperature sensor, the temperature of the heating block can be monitored and transmitted to a computing unit. It is common in the prior art to clamp, screw or glue the temperature sensor and the heating cartridge in the heat block with heat-resistant adhesive or silicone. Such ways of attaching these components are within the knowledge range of an average person skilled in the art. The heat break preferably designates an area that connects the heat block to a cooler, which can in particular be in the form of a heat sink, which can preferably also be attached. The heat break preferably interrupts the heat transfer from the heat block to the heat sink in order to advantageously have the lowest possible heat loss. This is achieved by the fact that the wall thickness is significantly reduced and thus a smaller cross-sectional area is available for heat transfer, particularly via a material with a lower thermal conductivity (e. g. titanium).

A cooler can preferably be in the form of a heat sink. The heat sink can be designed in a wide variety of variations and is used to keep the printed material cool. As a result, the printing material advantageously does not liquefy too quickly. The cooling element can actively promote cooling of the printing material, e.g. to achieve better transport of the print material through the print head. A heat sink can be a passive cooling element, which is essentially formed by a heat sink, which has ribs for cooling. Such ribs (also called cooling ribs or cooling fins) are used to increase the surface area in order to improve the heat transfer to the environment and thus the cooling. These ribbed surfaces can be part of the printhead itself or they can be designed as a separate component. The heat sink can preferably in turn also be in direct mechanical contact with the heating block or can be connected to the heating block via an additional medium. It can also be preferred that the heat sink enables active cooling, e.g. by a cooling Peltier element. The heatsink can be cooled with water or other liquids. Cooling can also be done using a fan, such as an axial fan or a centrifugal fan.

Correspondingly different temperatures may be necessary for different printing materials in order to be able to carry out reliable additive manufacturing with the additive manufacturing apparatus. It is advantageously possible through the temperature control device to provide temperatures for the printing material which can be above and/or below room temperature.

In a further preferred embodiment the additive manufacturing apparatus is characterised in that the print head comprises a cooler for cooling the print material before the print material enters a heater.

The embodiment mentioned is particularly suitable for first achieving solidification of the print material in order to then liquefy it, so that it can leave the print head with a particularly efficient transition. The embodiment mentioned is particularly suitable when the printing material is introduced into the print head as a filament. The embodiment mentioned is less applicable when the printing material is used as a hydrogel or slurry.

In a further preferred embodiment the additive manufacturing apparatus is characterised in that the print head comprises a cutting element configured to cut and/or shear the print material prior to an exit of the print head.

The cutting unit is preferably a cutting tool for cutting the print material within the print head. The cutting unit can be moved in the direction of the print material so that the it is cut at a desired location and/or area, preferably in the transverse direction. Advantageously, the cutting unit allows to insert several reinforced areas in one layer, to print two components without a direct connection or to insert predetermined breaking points. It is advantageously possible with the cutting unit to manufacture complex components, e.g. with local reinforcements to accomplish.

The cutting unit preferably cuts and/or shears the print material before it is printed on the receptor. For this purpose, the cutting unit preferably exerts a shearing force, resulting in a shearing movement of the material. For this purpose, a force is exerted in the transverse direction. For this purpose, the cutting unit can be moved linearly by an axial movement or by a rotary movement, for example by a rotary roller.

Cutting the material preferably means separating a piece from the rest of the material. Shear describes the action of a force or a pair of forces parallel to the reference area on the material, resulting in deformation with additional stress components. The expression shear force or shear force is used here. The couple may arise from the action of an offset couple acting on the material, resulting in distortion (shear distortion) of the region between the forces. The force couple includes two forces acting in opposite directions and parallel to each other. In particular, shearing the material can result in a cut. The force couple can also be caused by a moment (torque) acting on the material.

In a further preferred embodiment the additive manufacturing apparatus is characterised in that the additive manufacturing apparatus comprises a conveying unit to introduce the print material into the print head.

A conveyor unit is a component of the additive manufacturing apparatus that allows print material to be fed into the print head. For this purpose, it is preferred that the conveyor unit has a conveyor wheel, preferably in combination with a counter wheel. In particular, the combination comprising feed wheel and counter wheel has proven to be advantageous in order to be able to perform a retract mechanism. The conveying unit advantageously enables the printing material to be fed continuously into the print head. At the same time, the conveyor unit can advantageously be used for a retract in order to be able to make appropriate adjustments for the production of the component using the additive manufacturing apparatus.

In a further preferred embodiment the additive manufacturing apparatus is characterised in that the print material is feedable as a filament, liquid, hydrogel, slurry, resin, fibre granules and/or a mixture of these, wherein preferably the print material comprises a composite material comprising a matrix and fibres.

A large number of phases and/or configurations of the print material can advantageously be inserted into the print head in the additive manufacturing apparatus according to the invention. This makes it clear that a wide range of applications is available for the additive manufacturing apparatus.

Preferably, the print material comprises a fibrous composite comprising fibres and a matrix. A fibre preferably denotes a linear, elongate structure which comprises a fibrous material and/or has a fibrous form, the longitudinal form being e.g. smooth or frizzy and the cross-sectional shape is round or square, for example. Fibers are primarily used to denote thin threads with a diameter of preferably a few micrometres. Furthermore, fibres can also preferably be in the form of yarn. In this case, fibres of different lengths are in particular twisted, torn or intertwined with one another. In addition to the yarn, the fibre bundle can also be untwisted, in which case one speaks of a roving or fibre bundle. The matrix preferably means a material which comprises polymers and in which the fibres are embedded. Since the fibres preferably have a higher rigidity than the matrix, the applied load or force is preferably conducted along the fibres, which increases the overall stability of the fibre composite material. The higher rigidity leads to significantly higher stresses in the fibre with the same elongation between fibre and matrix.

Advantageously, by using a fibre composite material, extremely high stability can be achieved for the component to be produced using the additive manufacturing apparatus. The high stability is shown in particular by the high tensile and flexural strength, chemical resistance, temperature resistance and excellent corrosion resistance. Furthermore, the high stability can advantageously be achieved with a comparatively low weight for the component to be produced. Consequently, this increases the quality of the component that can be manufactured with the additive manufacturing apparatus.

The additive manufacturing apparatus can preferably comprise an additive component. The additive component can preferably be designed to harden the material on the print material on the receptor. The additive component can, for example, comprise a radiation source (for UR or IR radiation), a heating element, crosslinker, enzyme, and/or a spray.

In another aspect the invention relates to an use of an additive manufacturing apparatus according to the above described for an additive manufacturing method.

Those of ordinary skill in the art will recognize that technical features, definitions, advantages, and/or implementations directed to the additive manufacturing apparatus or preferred embodiments thereof also apply to the use of it, and vice versa.

By using the additive manufacturing apparatus, components can advantageously be produced which are characterized by complexity and can have the most variety of geometric configurations. This is achieved in particular by the fact that the additive manufacturing apparatus has five degrees of freedom. In particular, the first rotation device and the second rotation device can be used to rotate the support and/or receptor along a first rotation axis and a second rotation axis, so that there is a high degree of flexibility with regard to the design for the structuring of the print material. The first rotation axis and the second rotation axis form a plane that is essentially perpendicular to the printing axis, which in turn extends along the printing direction.

The additive manufacturing apparatus is very advantageous in the field of medicine and biotechnology. Particularly, the additive manufacturing apparatus can be used to produce a bone repairing scaffolds.

Aspects of the invention are to be explained below by way of example using figures, without being restricted to these.

### Figures

### Brief description of the figures

- Fig. 1: Schematic representation of a preferred embodiment of a rotation device.
- Fig. 2: Schematic representation of manufacturing of layers by the use of a rotation device according to a preferred embodiment.
- Fig. 3: Schematic representation of a preferred embodiment of the additive manufacturing apparatus.

### Detailed description of the figures

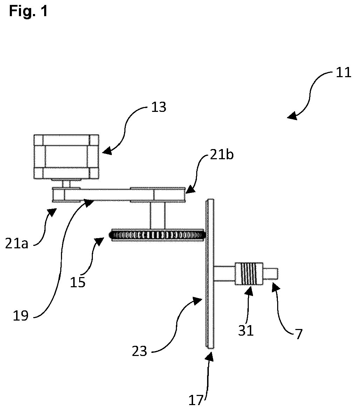

Fig. 1 shows a schematic representation of a preferred embodiment of a rotation device **11.** The rotation device **11** comprises a motor **13,** a bearing wheel **15** and a driven wheel **17.** The motor **13** is connected to the bearing wheel **15,** while the bearing wheel 17 is connected to the receptor. In the embodiment shown, the motor **13** is connected to the bearing wheel **15** via a belt **19** and a first gear wheel **21a** and a second gear wheel **21b.** The first gear wheel **21a** is connected to the motor **13** and the second gear wheel **21b** is connected to the bearing wheel **15.** The belt **19** is connected to the first gear wheel **21a** and the second gear wheel **21b.** Thus, through the belt **19** and a corresponding movement of the first gear wheel **21a** and the second gear wheel **21b,** a drive of the motor **13** can be translated into a rotation of the bearing wheel **15.** By using a belt 19 and a first gearwheel **21a** and a second gearwheel **21b,** the rotation speed can advantageously be set particularly precisely, in particular via the dimensional ratio of the first gearwheel 21a and the second gearwheel **21b.** Another advantage of using the belt **19** is that there is more space available for the bearing wheel **15** in the vicinity of an area of the driven wheel **17,** so that a higher integrity is also achieved with regard to the rotation as such.

Furthermore, in the embodiment shown, a receptor **7** is connected to the driven wheel **17** via a coupling **31.** The use of a coupling **31** has proven to be advantageous in that a particularly reliable transmission of the rotation of the driven wheel **17** to the receptor **7** is guaranteed. In particular, the use of a coupling **31** prevents the occurrence of overloads, for example due to an excessively fast rotational speed of the driven wheel **17,** as it can sufficiently cushion any overloads that may occur. Consequently, the risk of a failure is considerably minimised, so that no, or only in very special rare situations, impact times occur. Consequently, the use of a coupling **31** between the driven wheel **17** and the receptor **7** allows the additive manufacturing to be carried out by the additive manufacturing apparatus with particularly long-term stability.

Furthermore, a friction layer **23** is present on the driven wheel **17.** Advantageously, a better adhesion can be achieved by using the friction layer **23.** In particular, undesirable forms of movement are advantageously avoided, such as jerky movements. The grip on the driven wheel **17** is considerably improved so that a reliable rotation along the first and/or second axis of rotation can be performed.

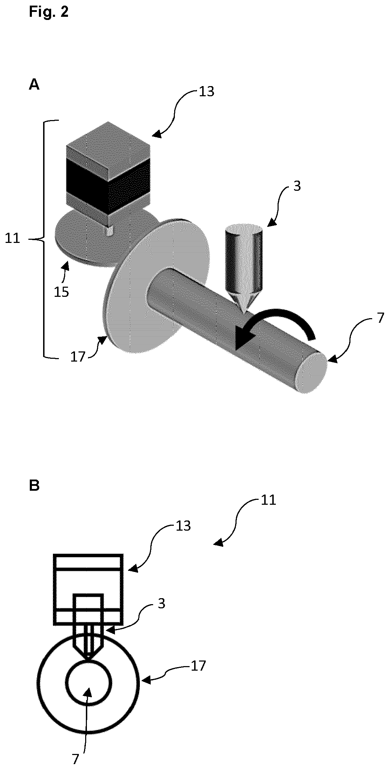

Fig. 2A shows a three-dimensional view of the rotation device **11.** The rotation device **11** comprises a motor **13.** The motor **13** is connected to the bearing wheel **15** and the bearing wheel **15** is in turn connected to the driven wheel **17.** The receptor **7** is connected to the driven wheel **17.** The arrow shows a direction of rotation in which the receptor **7** moves through the use of the rotation device **11.** The print material reaches the receptor **7** starting from a print head **3.**

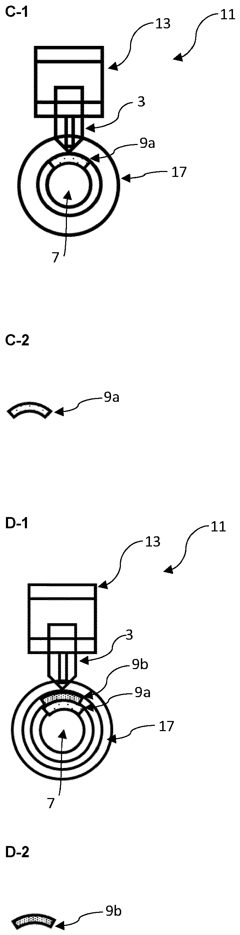

Fig. 2B shows a front view of the rotation device **11** with the same components as in Fig. 2A.. Fig. 2C-1 shows a manufacture on the receptor **7** of a first layer **9a.** The design of the first layer **9a** is shown in Fig. 2C-2. Fig. 2D-1 shows a manufacture on the receptor **7** of a second layer **9b.** The configuration of the second layer **9b** is shown in Fig. 2D-2.

This illustrates the great advantage that the rotation distance is not influenced by the printing layers **9a** and **9b,** which comprise printing material applied to the receptor **7.** By the rotation distance is preferably meant a sheet length along which a layer comprising printing material is applied to the receptor.

In this respect, the problem known in the prior art is that a first layer is applied to the receptor **7,** which performs a rotation along the first and/or second rotation axis and has the rotational distance L₁ = r₁ * θ, where θ denotes the rotation angle and r₁ denotes the radius of the circular segment of the first layer having the rotational distance L₁. Another layer, the second layer, which is to be applied to the first layer along the same angle θ, has the rotation distance L₂ = r₂ * θ, where r₂ denotes the radius of the circular segment of the second layer which has the rotation distance L₂. It can be seen that r₁ < r₂ applies, i.e. r₁ is smaller than r₂, so that accordingly L₁ is also smaller than L₂. This is disadvantageous because it is associated with a higher effort for the manufacturing apparatus, since different printing times are necessary for the application of the second layer on the first layer, in particular more time must then be spent on the second layer, the upper layer, or more material must be applied for the first layer, the lower layer. This can also be detrimental to the stability of the product to be manufactured by the additive manufacturing apparatus. The manufacturing step for the second layer is thus greater than that for the first layer.

According to the invention, this is advantageous because a linear velocity transmission mechanism is provided by rotation device **11.** In particular, there is an effective translation into a rotational movement along the first rotation axis and/or the second rotation axis in which the rotational distance is not influenced by the number of layers. In other words, the rotational distance is surprisingly advantageously not influenced by the height of the print head to the receptor. Again in other words, the rotation distance is not influenced by the print level of the print head. Compared to the state of the art, this advantageously means that the radius of the first circle segment of the first layer and the radius of the second circle segment through the second layer are identical, denoted r. Thus, for the turning distance L₁ of the first layer L₁ = r * θ along a rotation angle θ and for the turning distance L₂ = r * θ, thus L₁ = L₂. Consequently, the same effort is required for the manufacturing step for the second layer **9b** as for the first layer **9a.** This advantageously achieves a more efficient operation of the additive manufacturing apparatus **1,** since the same effort can be expended for the first material layer **9a** and the second material layer **9b** and, in particular, no higher effort has to be expended for the second material layer.

This results in optimal resolution for layers **9a, 9b** to be printed on the receptor **7,** especially when the print head has a different height or distance from the receptor **7.** As a result, both a higher print quality and a higher print precision are achieved for the production of objects that can have small and large radial dimensions. The improved precision is particularly apparent in that the position on the receptor **7** to which the printing material is to be applied and what design, in particular what rotational distance it may have, the layers are to have.

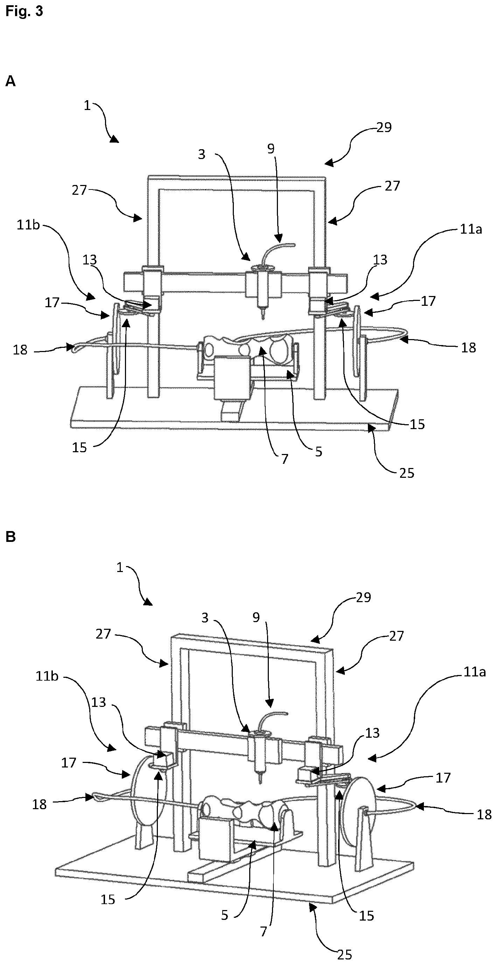

Fig 3A and 3B show a preferred embodiment of an additive manufacturing apparatus **1** in a front view and oblique view. The additive manufacturing apparatus **1** comprises a print head **3,** a support **5** and a receptor **7.** The receptor **7** is positioned on the support **5.** The print head **3** is arranged to print a print material **9** onto the receptor **7.** The print material **9** is flowable from the print head **3** in a print direction along a print axis. The additive manufacturing apparatus **1** comprises a first rotation device **11a** and a second rotation device **11b.** The first rotation device **11a** is arranged to provide a first rotation axis. The second rotation device **11b** is arranged to provide a second rotation axis.

In particular, the first rotation device **11a** is arranged to allow rotation along the first rotation axis and the second rotation device **11b** is arranged to allow rotation along the second rotation axis. The first rotation axis and the second rotation axis are each perpendicular to the pressure axis. In particular, the first rotation axis and the second rotation axis span a plane perpendicular to the pressure axis. The first rotation device **11a** and the second rotation device **11b** each comprise a motor **13,** a bearing wheel **15** and a driven wheel **17.** The motor **13** is connected to the bearing wheel **15.** The bearing wheel **15** is connected to the driven wheel **17.** The driven wheel **17** is connected to the support **5.** By driving the motor **13,** a rotation of the receptor **7** and/or support **5** along the first rotation axis and/or the second rotation axis can be performed. In the embodiment shown, the driven wheel **17** is connected to the support by the connecting means **18** in order to transmit the rotation of the driven wheel to the support **5** and/or receptor **7.**

The driven wheel **17** is connected to the support **5** and/or the receptor **7** via a connection means **18.** The connection means **18** in Fig. 3A and 3B is a flexible shaft. The flexible shaft advantageously ensures a high level of functionality, since mechanical stresses can also be absorbed by the flexible shaft during operation of the additive manufacturing apparatus **1.**

The additive manufacturing apparatus **1** includes a bottom plate **25** and a first sliding rail **27** for providing movement of the print head **3** along a print axis. The first sliding rail **27** is formed by a component of a holder **29** applied to the bottom plate **25.** Furthermore, a second sliding rail and a third sliding rail are provided to provide a movement for the print head **3** along a plane perpendicular to the print axis.

The driven wheel **17** is positioned on the bottom plate. Furthermore, it is preferred that the motor and the bearing wheel are positioned on the second and/or third sliding rail.

In an advantageously surprising way, the mass of the print head **3** can be kept particularly low. In other words, a particularly low mass of the print head **3** is made possible, so that the print head 3 can move particularly quickly and easily. This is advantageous for the entire printing process. In particular, no additional components are applied to the print head **3,** which ensures that the low mass of the print head **3** is maintained. The arrangement of the components of the first and/or second rotation device advantageously achieves a synergistic effect, as the considerable improvement of the printing process due to an improved possibility of movement of the print head **3** was unexpected.

### Reference signs

- 1: Additive manufacturing apparatus
- 3: Print head
- 5: Support
- 7: Receptor
- 9: Print material
- 9a: First Layer
- 9b: Second layer
- 11: Rotation device
- 11a: First rotation device
- 11b: Second rotation device
- 13: Motor
- 15: Bearing wheel
- 17: Driven wheel
- 18: Connection means
- 19: Belt
- 21a: First gear wheel
- 21b: Second gearwheel
- 23: Friction layer
- 25: Bottom plate
- 27: First sliding rail
- 29: Holder
- 31: Coupling

### Bibliography

[1] Minetto, Rodrigo, et al. "An optimal algorithm for 3D triangle mesh slicing" Computer-Aided Design 92 (2017): 1-10.
[2] Vaz, Claudia M., et al. "Design of scaffolds for blood vessel tissue engineering using a multi-layering electrospinning technique" Acta biomaterialia 1.5 (2005): 575-582.
[3] Sterman Y. Final project-The Additive Lathe. FabCentral; 2011. Available from: http://fab.cba.mit.edu/classes/863.11/people/yoav.shterman/secondUpdate.html (accessed May 6, 2012).
[4] Kenich A, Burnand-Galpin M, Rolland E, et al. "Lathe-Type 3D Printer." 2013. Available from: https://www.scribd.com/doc/147351838/Lathe-Type-3D-Printer (accessed November 5, 2018).
[5] Revotek. A Comprehensive Suite of Patented Technologies. 2017. Available from: www.revotekhealth.com/technology.aspx?t=1 (accessed May 7, 2019).

## Claims

1. An additive manufacturing apparatus (1) for carrying out an additive manufacturing process comprising a print head (3), a support (5) and a receptor (7), wherein the receptor (7) is positioned on the support (5), wherein the print head (3) is arranged to print a print material (9) onto the receptor (7), wherein the print material (9) is flowable from the print head (3) in a print direction along a print axis,
**characterised in that**
the additive manufacturing apparatus (1) comprises a first rotation device (11a) and a second rotation device (11b), wherein the first rotation device (11a) is arranged to provide a first rotation axis and the second rotation device is arranged to provide the second rotation axis, such that the support (5) and/or the receptor (7) is rotatable along the first rotation axis and along the second rotation axis, wherein the first rotation axis and the second rotation axis span a plane perpendicular to the printing axis,
wherein the first rotation device (11a) and the second rotation (11b) device each comprise a motor (13), a bearing wheel (15) and a driven wheel (17), wherein the motor (13) is connected to the bearing wheel (15) and the bearing wheel (15) is connected to the driven wheel (17) and the driven wheel is connected to the support (5) and/or receptor (7), such that by a drive of the motor (13) a rotation of the receptor (7) and/or support (5) along the first rotation axis and/or the second rotation axis is executable.

2. Additive manufacturing apparatus (1) according to the previous claim
**characterised in that**
the motor (13) is directly connected to the bearing wheel (15) or the motor (13) is connected to the bearing wheel (15) via a belt (19), a first gear wheel (21a) and a second gear wheel (21b), wherein the first gear wheel (21a) is connected to the motor (13) and the second gear wheel (21b) is connected to bearing wheel (15) and the drive of the motor (13) is transmittable via the belt (19).

3. Additive manufacturing apparatus (1) according to one or more of the previous claims
**characterised in that**
the receptor (7) and/or the support (5) is connected to the driven wheel (17) via a coupling (31).

4. Additive manufacturing apparatus (1) according to one or more of the previous claims
**characterised in that**
the motor (13) is selected from a group comprising a stepper motor, a gear motor, an electric motor and/or DC motor.

5. Additive manufacturing apparatus (1) according to one or more of the previous claims
**characterised in that**
that driven wheel (17) is connected to the support (5) and/or the receptor (7) via a connection means (18), wherein preferably the connection means is a shaft, particularly preferred a flexible shaft.

6. Additive manufacturing apparatus (1) according to one or more of the previous claims
**characterised in that**
that the first rotation device (11a) and/or the second rotation device (11b) comprise an encoder which is connected to the driven wheel, wherein the additive manufacturing apparatus (1) comprises a further motor for a drive of the support and/or receptor, wherein the encoder is configured to send an electric signal to the motor for the drive of the support and/or receptor.

7. Additive manufacturing apparatus (1) according to one or more of the previous claims
**characterised in that**
a friction layer (23) is present on the driven wheel (17), preferably the friction layer (23) being selected from a group comprising rubber, ceramic, silicon, nickel, chromium, carbide, in particular tungsten carbide and/or chromium carbide, stainless steel, their compounds and/or alloys, wherein preferably the friction layer (23) has a thickness between 1 nm - 1 cm, preferably between 1 µm - 5000 µm, particularly preferably between 50 µm - 500 µm.

8. Additive manufacturing apparatus (1) according to one or more of the previous claims
**characterised in that**
the additive manufacturing apparatus (1) comprises a bottom plate (25) and/or a first sliding rail to provide a movement of the print head (3) along the print axis, a second sliding rail and third sliding rail to provide a movement along a plane perpendicular to the print axis, wherein preferably the driven wheel (17) is positioned on the bottom plate or on the first sliding rail (27) and the motor (13) and the bearing wheel (15) are positioned on the second and/or third sliding rail.

9. Additive manufacturing apparatus (1) according to one or more of the previous claims
**characterised in that**
the additive manufacturing apparatus (1) comprises a housing, wherein the housing surrounds the print head (3), wherein preferably a holder (29) and is attached to a bottom plate (25), wherein preferably the housing comprises an at least partially transparent section.

10. Additive manufacturing apparatus (1) according to one or more of the previous claims
**characterised in that**
the additive manufacturing apparatus (1) comprises a retract, wherein the retract conveys the print material (9) back into the print head (3), wherein preferably a slicer co-determines an action of the retract.

11. Additive manufacturing apparatus (1) according to one or more of the previous claims
**characterised in that**
the print head (3) comprises a temperature control device in which or on which a heater and/or a cooler is incorporated so that a temperature for heating and/or cooling the print material (9) is providable.

12. Additive manufacturing apparatus (1) according to one or more of the previous claims
**characterised in that**
the print head (3) comprises a cutting element configured to cut and/or shear the print material (9) prior to an exit of the print head (3).

13. Additive manufacturing apparatus (1) according to one or more of the previous claims
**characterised in that**
the additive manufacturing apparatus (1) comprises a conveying unit to introduce the print material (9) into the print head (3).

14. Additive manufacturing apparatus (1) according to one or more of the previous claims
**characterised in that**
the print material (9) is feedable as a filament, liquid, hydrogel, slurry, resin, fiber, granules and/or a mixture of these, wherein preferably the print material (9) comprises a composite material comprising a matrix and fibres.

15. Use of an additive manufacturing apparatus according to one or more of the previous claims for an additive manufacturing method.
